# EUROPEAN PATENT APPLICATION

(11) **EP 4 575 989 A1**
(43) Date of publication of application: **25.06.2025**
(21) Application number: 23219394.6
(22) Date of filing: 21.12.2023
(51) Int. Cl.: G06T 7/20

(54) **A METHOD FOR IMPROVING TRACKING**

(71) Applicant: Axis AB, 223 69 Lund (SE)
(72) Inventor: YUAN, Song, 223 69 Lund (SE); DANIELSSON, Niclas, 223 69 Lund (SE)
(74) Representative: AWA Sweden AB

(57) **Abstract**

A method for improving tracking of objects in a scene, using an overview monitoring camera, comprises tracking objects in a plurality of image frames (138) depicting the scene to produce current object tracks. The method further comprises detecting object candidates (140) in an image frame subsequent to the plurality of image frames depicting the scene, and calculating, for each object candidate, an association measure (142) which is indicative of a likelihood that the object candidate is associated with a current object track. Furthermore, the method comprises correlating a view of the overview camera with a heatmap of the scene, the heatmap of the scene providing data indicative of areas in the scene having an elevated degree of occurrence of historical verified object tracks, and adjusting the association measure (144) or an association threshold (146) for object candidates which according to the heatmap are located in areas in the scene having an elevated degree of occurrence of historical verified object tracks so as to increase their probability of being associated with a current object track. In a final step of the method each object candidate is associated with a current object track if the association measure is above an association threshold (148).

## Description

### TECHNICAL FIELD

The present invention relates to a method for improving tracking, and to a camera system configured to perform said method.

### BACKGROUND

The functionality of tracking is a standard feature in video surveillance applications. It is used for the obvious task of tracking objects in a surveilled scene, but it is also used as a means for providing robustness for features such as people counting and cross-line detection in such a scene. Consequently, the quality of a tracking method will impact several functionalities for a surveillance system.

Tracking of an object involves correlating several detections of an object into a single object track. This is commonly performed by predicting where currently tracked object will be observed the next time, based on its current motion. If the next detection is close enough to the prediction, it is deemed to concern the same object. The actual method is slightly more complex than this, and some parts of it will be elaborated in the detailed description, although the basic methodology is comprised in prior-art. There are instances where the track will be lost, by account of, e.g., occlusion by another object, or confusion with other object, etc.

Since the advent of the possibility of extracting object features, meaning that it is possible to define the identity of an object through its identifying features, it is possible to, under the right circumstances, mend a broken track by using reidentification. This basically corresponds to performing an automatic verification of an object identity and to reconnect two tracklets into one single track if they relate to the same object. Reidentification will require an adequate image quality to be reliable, it is therefore more commonly used in camera systems having better resolution, and/or the ability to zoom in on objects, so as to accomplish an adequate pixel density.

Camera systems of the latter type, especially if they are also able to pan and tilt in order to maintain a tracked object within a field of view, have a considerable advantage when it comes to tracking an object. The associated disadvantage, however, is that while one object is tracked, the rest of the scene may be without surveillance coverage. For that reason, camera systems aimed at providing both a continuous scene overview and the ability to zoom in on induvial objects or locations may comprise both one or more overview cameras having a wide field of view, and one or more PTZ-cameras (Pan-Tilt-Zoom cameras) in order to enable detailed views. As a brief note, an overview camera may very well have a greater pixel density than a PTZ-camera, but the PTZ-camera will be able to acquire images with greater pixel density of an object due to the ability to zoom in.

There is consequently a need for an improved method and configuration for tracking, in particular tracking using an overview camera. The term "overview camera" may be defined by means of its limitations in a particular camera setup. It relates to a camera that, for a particular scene or for portions of a particular scene, cannot acquire images of sufficient quality to perform reidentification. A typical example would be that an object is too far away for the camera to extract an image with sufficient pixel density. This could be phrased as tracking where the image quality may put limitations on the tracking performance, which is true for any camera at one point or another. In a camera implementation the overview camera will typically correspond to a fixed camera (fixed orientation and fixed or no zoom) with a wide field of view, intended to provide a scene overview and situational awareness. Several overview cameras may be used in combination to cover an even larger field of view, and one or more PTZ-cameras may be arranged to provide detailed views of portions of the surveilled scene.

### SUMMARY OF THE INVENTION

It is an object of the present invention to provide an improved method for tracking of an object in a scene, in particular in situations where utilization of reidentification is not possible. According to a first aspect, these and other objects are achieved, in full or at least in part, by a method according to claim 1. Another object is to provide a camera system configured to perform such method, as detailed in the subsequent independent claim and its dependent claims, as in the detailed description to follow.

Advantages of the present invention, according to several embodiments thereof, includes improving tracking, in particular in tracking situation where the current tracking algorithm has difficulties following a tracked object from one position to another. According to claim 1 this is accomplished by means of a method for improving tracking of objects in a scene, using an overview monitoring camera. The method comprises tracking objects in a plurality of image frames depicting the scene to produce current object tracks. A part of tracking is to detect object candidates in an image frame subsequent to the plurality of image frames depicting the scene, with the purpose of finding out which of these object candidates belong to the current track. To that end an association measure is calculated for each object candidate, which association measure is indicative of a likelihood that the object candidate is associated with a current object track. Under circumstances where the quality of the image data is of poor quality, or where other causes introduce uncertainties in the tracking, it may be enhanced by the introduction of further steps, including: Correlating a view of the overview camera with a heatmap of the scene, the heatmap of the scene providing data indicative of areas in the scene having an elevated degree of occurrence of historical object tracks, and adjusting the association measure or an association threshold for object candidates which according to the heatmap are located in areas in the scene having an elevated degree of occurrence of historical object tracks so as to increase their probability of being associated with a current object track. Once these steps have been taken the tracking algorithm can proceed with the step of associating each object candidate with a current object track if the association measure is above an association threshold. In this way object candidates along well-trodden paths will have a higher likelihood of being associated with a current track.

Since the view of the overview camera is correlated with the heatmap, meaning that a position in the overview camera may be translated to a position in the heatmap, it is readily possible to extract values from the heatmap and apply them to the adequate position in the view of the overview camera.

The heatmap may preferably be generated using a PTZ-camera tracking objects in the scene over time and storing tracks followed by the objects. Using a PTZ-camera enables for improved tracking performance over a surveilled scene, which increases the amount of high-quality data of historical tracks.

To further improve the quality of the heatmap data, the tracking is performed using intermittent or continuous reidentification to ensure a verified track from each individual object being tracked.

As will be further detailed in the following the heatmap includes position measurements for recorded object tracks, yet it may also contain representations of measurements, rather than the actual measurement results. In this way the position data for historical tracks will be readily available for queries. The heatmap may also include information regarding typical velocity for historical tracks, object class, or object speed all data that may be used when filtering information from the heatmap prior to use, so as to enable higher precision during tracking.

In this way the method may also include selecting heatmap data corresponding to an identified object class, or an identified object speed. An example could be that if the tracked object is being identified as a car, it would probably be beneficial to only use historical data relating to cars, rather than historical data including how, e.g., humans have been moving in the scene. The object speed may be used as a filtering parameter for selecting a sub-portion of the heatmap.

A typical system for performing the method would comprise a PTZ-camera and an overview camera, and for the invention to operate properly the view of the overview camera is positionally calibrated with a view of the PTZ-camera. Such a system would enable performing of the method according to any embodiment, and most such systems would be positionally calibrated anyway, since the PTZ-camera often is utilized to zoom in on selected events in the field of view of the overview camera.

Apart from including information assembled using the PTZ-camera, the heatmap may also include data from one or more overview cameras. One advantage of this is that it may speed up the generation of a functional heatmap, and as long as the data is robust enough, the more data the better. Another advantage is that it would be possible to use the opportunity to monitor how an actual association measure would vary for the overview camera over the surveilled scene. In situations where data from the overview camera is not robust enough for tracking, a verification from the PTZ-camera could confirm that it indeed is the same object as before, to give a straightforward example. In use, when the association measure or association threshold is adjusted, the recorded data could be used.

The association measure may be increased in areas of the heatmap comprising verified tracks, with e.g., distance between object detection and a path of the heatmap, or heatmap intensity, so as to enhance a likelihood of an object detection to be associated with a current track. This could be performed before a track is initiated, which may have the effect of increasing the chance of a track being located if, e.g., an object is located far away from an overview camera. A similar effect could be achieved by lowering the detection threshold in corresponding areas. Relevant areas would be close to historically verified tracks, and "close" could be quantified with "within a positional margin of error", meaning that if there is an object candidate detection that potentially could be located along a historically verified track, it should have a greater chance of being associated with a track. Also, it is in fact more likely that such a detection is an actual object rather than a spurious detection.

Although a system performing the method preferably includes a PTZ-camera and an overview camera, the principles of the invention may be partially achieved with a PTZ-camera only, or with multiple PTZ-cameras for that matter. The reasoning is that a PTZ-camera may be used in a fully zoomed-in mode, or whichever suitable degree of zoom so as to enable collection of data for the heatmap, and a (fully) zoomed-out mode during regular operation. A reason for using the PTZ-camera in a zoomed-out mode during regular operation, would be that the field of view covered in a zoomed-out mode is larger, thus increasing situational awareness, one key feature of an overview camera.

### BRIEF DESCRIPTION OF THE DRAWINGS

Fig. 1 is a schematic of a camera system that may be used in embodiments of the present invention.
Fig. 2 illustrates a scene overviewed by a camera system configured to perform a method according to an embodiment of the present invention.
Fig. 3 illustrates another scene, similar to Fig. 2.
Fig. 4 is a schematic heatmap of verified object tracks in the scene of Fig. 3
Fig. 5 illustrates use of the heatmap of Fig. 4 in accordance with an embodiment of the present invention.
Fig. 6 is a graph showing how selecting a different probability distribution curve could be one way of realizing the present invention according to one or more embodiments.
Fig. 7 is a flowchart of an embodiment of the present invention.

### DETAILED DESCRIPTION OF EMBODIMENTS

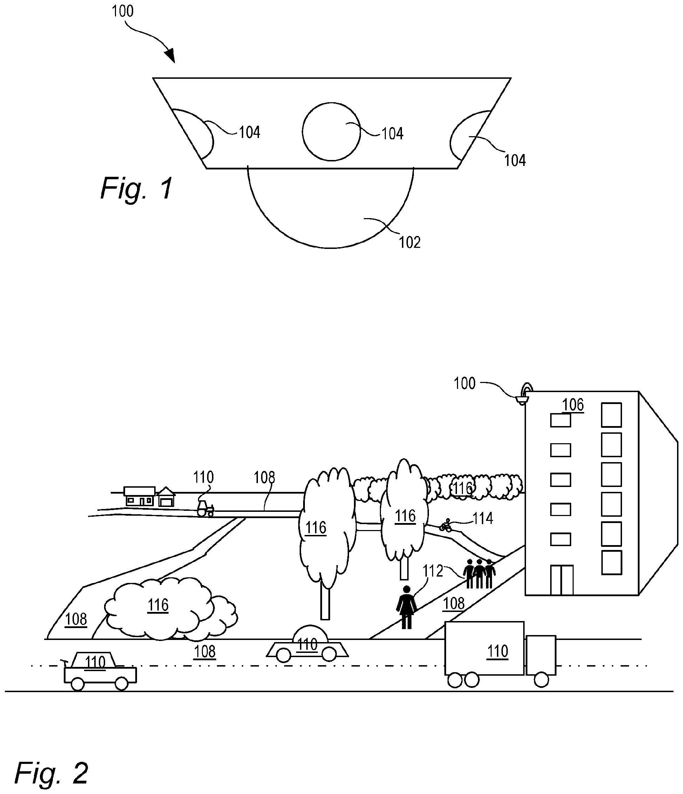

Fig. 1 is a schematic view of a camera system 100 that could be used when implementing the present invention. The camera system 100 comprises a single PTZ-camera 102, i.e., a camera with pan, tilt, and zoom capabilities. The capabilities enable it to cover large areas while also zooming in on details, follow moving objects over large distances. The camera system 100 also comprises one or more overview cameras 104, which may be cameras with a fixed focal length generally covering a large field of view compared to the PTZ-camera 102. Again, in contrast to the PTZ-camera the overview cameras 104 typically have a fixed orientation when in use, i.e., they lack motor assisted pan and tilt during operation. In the illustrated embodiment there are four overview cameras 104, and together they may cover a 360-degree field of view of a scene. The overview cameras 104 are used for the obvious purpose of covering a large field of view and providing an overall scene understanding. In a dedicated system 100 of the type illustrated in Fig. 1, the overview cameras 104 are aligned and calibrated such that a single stitched overview image may be formed by combining the images from each overview camera. Also, the overview cameras 104 are aligned with the PTZ-camera 102, and vice versa, enabling for the PTZ-camera 102 to immediately move to image an area in the field of view of any of the overview cameras 104, and for the overview cameras to indicate a current field of view of the PTZ-camera, e.g., with a graphical overlay such as a rectangle.

The camera system of Fig. 1 could be a system such as the ones available within the Axis Q-60-61 series, e.g., Q6010-E or Q6100-E by the present applicant, including all its capabilities. Yet it could also be any tailormade combination of individual cameras.

The resolution in terms of pixels per image may be greater for an overview camera than for a PTZ camera, or vice versa, yet for the present camera system the zoom ability of the PTZ-camera makes it far superior when it comes to the pixel density of imaged objects, in particular objects located further away, meaning that when the object is imaged, a larger concentration of pixels will be dedicated to it.

Leaving this specific embodiment for a while, a typical embodiment could comprise a PTZ-camera 102, which is used when assembling the heatmap, and at least one overview camera 104 (one exception will be disclosed below), which is used during an actual process of tracking. These cameras, the PTZ-camera 102 and the (at least one) overview camera 104, will not have to be combined into a single unit 100, but they do need to be calibrated such that it is possible to positionally transform between a position in a coordinate system in an overview camera 104 to the PTZ-camera 102, and vice versa. The at least one overview camera 104 could be a PTZ-camera 102 in a zoomed-out state, so in a very specific, and probably not at all common embodiment, the PTZ-camera 102 and the overview camera 104 could be one and the same. Although it is not what is believed to be the most preferred embodiment, the capabilities of the different camera types are used at different times, meaning that a single camera could perform the tasks of a PTZ-camera first, and then zoom out and perform the tasks of an overview camera, in the context of the present invention. Although this is a rather unlikely embodiment, it will be highlighted at a later stage as well, with the purpose of further clarification.

Fig. 2 is a schematic overview of a surveillance scene. A camera system 100, e.g., a camera system of the type illustrated in Fig. 1, is arranged at the upper left corner of an apartment building 106. The overview cameras of the camera system 100 will then be able to provide an overview of every portion of the scene, or at least of the portion not being occluded by the building 106 itself. Consequently, the PTZ-camera will be able to image the same portions of the scene, but in a more selective manner. The scene contains a couple of roads and walkways 108, some vehicles 110, some pedestrians 112, a cyclist 114 and some trees and bushes 116, all potentially being moving objects (or in the case of the greenery, swaying objects).

The PTZ-camera 102 may follow individual objects 108-114 in the scene, increasing zoom level with distance from the camera system 100. The overview camera(s) 104 may be used for the same purpose, apart from not being able to increase (or change) a zoom level, the same image analytics may be utilized. Examples of image analytics include:
- Motion detection, where a shifting pixel input in an area may be interpreted as motion. This analysis will react on moving objects, including vehicles and individuals, but also swaying trees and moving shadows, etc. By filtering on, e.g., size of coherent area, feature of the detected change, etc. it is possible to discriminate certain types of motions even with this rudimentary technique.
- Object detection, where features of the object may be extracted so as to enable not only a motion detection but also a classification of the type of object in terms of size or even object class (human, car, bicycle, tree, etc.).
- Reidentification, where feature vectors representing the appearance of the object are extracted from the moving object so as to enable the provision of a unique identifier for the object.

Nowadays, reidentification is typically used in the context of deep learning and neural networks, and it does require an elevated level of detail (resolution or pixel density) in order to be reliable. Presently, the computational cost of performing reidentification using a neural network is too high for it to be performed live for each frame and object at higher framerates. Instead, the reidentification will commonly be performed intermittently, at a lower framerate and/or when triggered by an input, such as if a more rudimentary tracker loses a track. If performed on recorded material the computational cost is of less concern since such procedures may readily be performed with access to more powerful or dedicated CPU: s.

For an object tracking algorithm the motion detection and the possible object detection is only a first part of the tracking. For an individual scene and for an individual moment in time; there may be multiple detections. The second part is to filter all these detections in order to deduce whether a new detection relates to a previous track or not. This may be performed using an "association measure", which basically corresponds to the likelihood of a new detection belonging to the previous track or not. In conventional object tracking use is often made of a Kalman filter, considered to be the best linear unbiased estimator. The Kalman filter is an algorithm that based on previous measurements makes a prediction concerning where the object will appear in a subsequent situation. There is a lot of literature concerning Kalman filters and tracking, yet in the simplest case it will track an object over a number of frames and use parameters such as "last known position", "direction" and "speed" (i.e., the "state" of the object) to make a prediction of where the object will appear, including involved uncertainties in the prediction. For example, the prediction may include a probability density function which indicates the likelihood that the object will appear at different locations, calculated using statistical considerations based on the input data. It will then make a measurement, i.e., a detection or observation, of where the object is, the measurement itself involving its inherent uncertainties. The predicted and the measured location will then be used to determine an updated position for the object, and so forth. In a video surveillance situation, the measured position will be based on image processing, and there is an additional challenge of knowing whether a detected object belongs to the tracked object or not. For example, there may be several object detections in the vicinity of the predicted position, so there is then the additional problem of selecting which object detection to use. When verifying a prediction use is made of the association measure mentioned above, and simply put the closer to the predicted position, the higher the association measure, i.e., the higher the likelihood for a detection to be related to the previous track. For example, a detected object may be associated with the previous object track if the association measure exceeds an association threshold, and when there are several detections to consider the one with the highest association measure will be selected. Since other parameters of the detection may also be taken into account, the term "association measure" will be used in the present invention. In this way the chances of maintaining the tracking of one and the same object will increase as opposed to an approach where any appearing object in the vicinity has an equal opportunity of being associated with the current track.

In a simple version the association measure may be based purely on distance from a predicted position, e.g., by using the probability density functions already mentioned. This would imply that if detection candidates are at equal distance from a predicted position, they will have the same association measure and thus the same probability of belonging to a current track. The association measure may, however, be more complex and include parameters such as size and velocity to further enhance the chance of associating the correct detection with the current track. It may also contain, or be used in combination with, a reidentification portion, meaning that the appearance of the object is taken into account, e.g., by involving the already mentioned feature vectors. The weight given to this reidentification portion could vary. It could, e.g., be given a greater weight if several object detections are equally likely to belong to the previous track based on the regular association measure. The reidentification portion may also be used to reconnect a new tracklet or detection to an existing track in situations where a track has been lost for a period of time. In this context a "tracklet" is a portion of a track, not yet associated with another track.

The above list of image analytics is more or less arranged in the order of detail required, (i.e., the level of detail/resolution of the observed object), which for an individual camera will translate to distance from the camera. The PTZ-camera 102 will be able to adjust zoom and therefore utilize reidentification further away from the camera. This comes at the cost of a reduced field of view, and in situations where there are multiple objects of potential interest one either has to prioritize one or a few objects, or shift the orientation of the PTZ-camera 102 between the objects. Meanwhile, the overview camera(s) 104 may follow multiple objects at the same time, yet with a tracking robustness that is likely to decrease with distance from the camera system 100 more rapidly, since there is no zoom option available.

A straightforward attempt at a solution for improving tracking could be to adjust an association measure or an association threshold with distance, for the overview cameras. This would essentially introduce more leeway for associating new detections with an existing track. This approach may be appropriate for some use-cases, yet it is likely to increase the occurrence of erroneous track associations to an extent that would affect tracking reliability.

The idea of the present invention is to provide an improvement to known technology in a situation as the one exemplified above. For that purpose, an embodiment of the invention may start with a data-assembly period. During that period the PTZ-camera is utilized to assemble data regarding motion in the scene, in particular motion associated with moving objects, the movement of which may form tracks in the scene, since this is information that is likely to be pertinent in a surveillance scenario. This is performed by tracking of objects, and the data will include object position and effectively object position over time (i.e., also an indication of speed). The data may also include object class (bus, bike, car, individual, etc.) and even an identity of the object. An identity does not necessarily imply that it is known exactly who the individual is, etc., only that it is verified that it is the same individual all the time, and that the individual may be separated from another individual. What is said about "individual" is also true for other object types in regards of identity, an example being that a particular track may relate to a single bike, or a single car, etc.

The PTZ-camera will assemble data by tracking moving objects. It may be a fully automated tracking which the PTZ-camera is conducting while not occupied with user-defined tasks, yet it may also be data collected during user-defined tasks. A user-defined task may be an operator following an object by manually (using a graphical or physical user interface) moving the PTZ-camera to follow the object. During such a manual tracking, the tracking algorithm may still be running to extract an object position over time. The data acquired for a tracked object is at least the object position, which may be stored in a common positional reference system so as to be immediately retrievable by any camera of the system (or in fact by a control system for the camera system). Each track may be stored as multi-sampling points in a suitable coordinate system, preferably a common coordinate system for any camera of the system (which simplifies later use). It could also be stored as multi-trajectory curve, or any other suitable format. As several tracks are following the same, or essentially the same, path, a weight (a "temperature") for that path may be increased, or simply an additive functionality where essentially a path traveled twice will be given the value "2" while a path traveled 600 times will be given the value "600". Such considerations are not intimately coupled to the present invention, but rather to how data is assembled in a heatmap.

Over time the data assembly will result in at least one heatmap over the surveilled area. The heatmap may be separated into object categories, times of day, etc., hence the use of "at least one" heatmap. It may of course be a single, multidimensional heatmap, where the various parameters are represented in different layers of the heatmap, but it would be equivalent in terms of the effect if different parameters where stored in different heatmaps, in different portions of a vector, in different cells of a matrix, etc. The heatmap will correspond to a representation of the scene where a degree of motion will be quantified, and may be presented by intensity in an image of the heatmap. More specifically it is not motion as such, but rather the occurrence of verified motion tracks over time, so consequently, if there is no trackable motion it will not be registered in the heatmap. This has the advantage of eliminating the effects of spurious motion, motion where vegetation moves back and forth, and most effects of motion detection due to noise. The scale of the heatmap may be relative or absolute, in relation to a number of verified object tracks. At the start it may be a linear dependence, such that an area having ten verified object tracks will be twice as "hot" or elevated as an area having five verified object tracks. Over time there may be an effect of saturation, such that smaller differences in object track frequencies are not distinguishable. Furthermore, when it comes to using the data of the heatmap, one may choose to merely distinguish between areas with verified motion tracks and areas without motion tracks. In such a situation there may also be a thresholding function, such that a certain number of verified motion tracks are required for the area to be classified as an area "with verified motion tracks". These verified motion tracks will be referred to as "paths". It is possible to reduce the dynamic of the heatmap by introducing a distance threshold, which resembles the effects of a segmentation, where verified motion tracks that run in parallel and within a threshold distance from each other may be represented by one and the same path. Such an approach could be beneficial for less travelled paths. For paths having a high frequency of verified motion tracks the tracks will most likely distribute according to a normal distribution along the path.

The resulting heatmap(s) may then be stored and used by the overview cameras in the manner to be explained in relation to two scenarios. The first is that an object moves away from the overview camera, into the distance, and the second is that an object approaches the overview camera, from a distance. From the viewpoint of the present invention the two scenarios are more or less identical, yet within the realms of a camera installation the two scenarios are extremes since in the first you start up with maximum image quality while in the second with minimum image quality.

In the first example the overview camera will be able to track the object with relative ease. The resolution will even be good enough to perform reidentification if so needed, at least to start with. As the object moves away the possibility to perform reidentification will eventually disappear, and the tracking will have to rely on other parameters, such as a conventional Kalman filter tracking, or similar tracking of that type. At this stage there are at least two uses of the heatmap. One is to adjust an association measure along a detected path. As an example, if the regular association measure for an object detection is calculated to 75 %, this may be adjusted upwards to 77 % or 85 % etc. depending on its distance from a path. This makes it more likely to maintain a track that moves along the paths. There is a risk that spurious object detections along paths are included in tracks, yet the benefit should outweigh this risk since the scene-specific statistics show us that it is along the paths that objects most often move. This association measure is to be used in combination with other tracking techniques, meaning that, e.g., a Kalman filter could still be used to predict a future position of the tracked object, yet the chances of finding the object along the path will increase. This will have the effect of making the tracking more robust, reduce the chances of spurious motions outside of the paths to be involved. Such spurious motions could emanate from, e.g., trees or bushes moving in the wind, yet since these have never resulted in a tracking by the PTZ-camera they will not affect the heatmap.

Another approach, which may be used in combination with the former, is to adjust an association threshold, and in effect lower the threshold that the association measure is to exceed in order to be associated with an existing track.

The numbers given in relation to the measure or the threshold are only meant to indicate a change, as qualitative measures. Every tracker will have a parameter that signifies a confidence in regard to an object association. The phrase "adjusted association measure" means that this parameter is altered in a direction making a track association more likely. As was mentioned before, a general alteration of the threshold, e.g., as function of distance from the overview camera, may have the effect of increasing the number of motion detections in an unwanted manner. Meanwhile, the spatial precision by which this is performed in embodiments of the invention, supported by the heatmap, enables enhanced tracking capabilities.

Another option could be to tweak the Kalman filter (or any other tracker filter used) in accordance with the heatmap. The tweaking could imply that an estimation of an association measure for associating an object detection varies non-symmetrically with a distance from a predicted position. More specifically, there could be a steeper decay of the measure in a direction orthogonal to a path than in line with the path. This makes it more likely to find the object along the path, which is to be expected, while also acting as filter in regard of spurious motion detections to either side of the path.

These two options may be combined, wherein the latter example would also include adjusting a detection threshold within the reshaped area of uncertainty.

The above approaches may be conducted based on the heatmap and the regular tracking algorithms alone. However, in one embodiment of the invention the adjustment of the detection threshold is performed based on further data collected during the training period yet collected by the overview cameras rather than the PTZ-camera. Such further data could be actual tracking data from an overview camera, benefitting from the enhanced information from the PTZ-camera verifying the identity of the object. This further data could then be used to adjust the threshold to a level that is suitable for particular regions of the surveilled scene. In this context it should be mentioned that the "training period" does not have to have a defined endpoint. For the heatmap to be useable it would have to contain information sufficient for the purposes of the present invention. The term "sufficient" may be considered vague, but the truth of the matter is that there is no clear cutoff for when there is enough information. For example, it could be enough that objects have been tracked along some roads and walkways for the invention to have a positive impact. Still, a larger statistical basis is better, for obvious reasons. Furthermore, the buildup of information in the heatmap does not even have to have any distinct endpoint, any tracking performed during the lifetime of the camera system may be added to the heatmap.

Returning to the embodiment at hand and to give a more elaborate example of "further data", mentioned in the previous paragraph. It is possible to utilize the verification performed by the PTZ-camera to validate an object tracked with the overview camera, in particular in situations where a tracking algorithm used by the overview camera would fail. In the setup for this embodiment, which is more of an alternative when assembling data for the heatmap, the PTZ-camera and the overview camera will track the same object. During the procedure of tracking with the overview camera, due to variations in distance, degree of occlusion, shadowing, etc., a tracking confidence of the overview camera (i.e., of the tracking algorithms running on the image data acquired by the overview camera) may vary. These variations may be logged, and in particular instances where the association measure falls below an association threshold for the tracker of the overview camera. The varying association measure may be added as a piece of data stored in the heatmap or in a related look-up table. Using this data makes it possible to adjust tracking parameters for the overview cameras, i.e., either the association measure or the association threshold as a function of position along the paths in a more controlled manner. As is the case for the other data related to the heatmap this data may vary with object type, time of day, etc. In any case, the embodiment makes it possible to make a tailormade adjustment of association thresholds along the area of the heatmap. Regarding variations over the time of day they are not experiences to be significant. There is indeed a difference in performance between daylight and pitch black conditions during the night, yet in a modern society it is rarely pitch black to the extent that it affects modern digital surveillance cameras.

With this in mind we shift to the scenario that an object approaches the camera system from a distance. Essentially, the same approaches may be used, yet there is a difference in that when an object appears in the distance, it will by default be an uncertain object detection to start with (in contrast to the previous scenario where the starting point was an optimal tracking situation with high-resolution image data of objects close to the camera system). For that reason, object detections close to paths may be more likely to be starting points for a track than object detections further away from tracks. This may be used by the tracking algorithm in terms of being more prone to initiate object tracking on or close to paths. If the track is not verified with a number of consecutive associated object detections, the initiated track may be cancelled. The tracking algorithm may be made "more prone" by adjusting an association measure or association threshold, or a combination of both, as previously disclosed.

Also, once an object is detected and a track is initiated, parameters such as class, size and speed may be utilized to access the correct layer of the heatmap (or the correct heatmap, etc.) so as to further refine threshold values. The refinement corresponding to filtering data from the heatmap to obtain data more relevant for a current object being tracked. If an operator would like to look for a particular object type (an object class, objects travelling at/below/above a particular speed, etc.) the most suitable layer may of course be used from the start. This may apply for either of the scenarios above.

A common thing for any of these approaches is that the adjustments will not have to be applied all the time or in all positions of the scene. Application may be triggered by a need, e.g., a loss of an object during tracking, a change in visibility, etc. Another common thing is that the adjustments are meant to support or enhance tracking along a path, not cancelling detections outside of the path, since objects found outside of paths may be as relevant in a surveillance scenario.

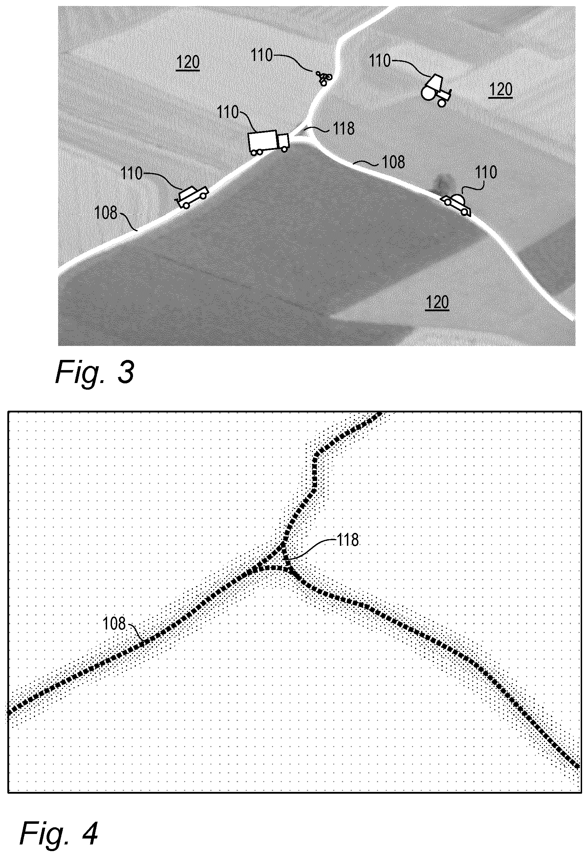

Fig. 3 is a perspective view of a simplified scene, essentially comprising a couple of roads 108, a fork 118 in the road, some vehicles 110 and surrounding fields 120.

Fig. 4 is a fictional heatmap of the scene of Fig. 3. The concentration of dots indicates a level of track occurrences (notably track occurrence, not motion occurrence). As can be seen, some areas in the scene have a higher level of track occurrences than others, i.e., some areas have an elevated degree of track occurrences. There will be tracks mainly along the roads. For illustrative purposes the occurrence or frequency of tracks will gradually drop to the side of the roads, represented by means of a decreasing intensity (or dot concentration in the imaged example). In a real scenario the drop-off is likely to be steeper, since it is not likely to find vehicles travelling along, but not on, the roadway. Such distributions may obviously vary from scene to scene, or within scenes. Some motion will be detected on the fields, e.g., animals and agricultural vehicles, yet in the most likely scenario this motion will be insignificant in comparison to the motion along the roads. Although not necessary, it is preferred that the tracks assembled in the heat map are verified. In this context "verified" could signify motion by an object that could be relevant from a surveillance perspective. It may also be expressed in that the object follows a track, and that it is verified that it is the same object along the entire track. Verified then to the degree possible using a tracking algorithm of, most preferably, the PTZ-camera used to assemble the heatmap. The outstanding optical performance of the PTZ-camera will act as a first validation for the verification, yet more concrete steps of verification may also be involved. An example of verification may include reidentification, which may be performed continuously, intermittently, or in situations where needed in order to verify a track. This could be following a temporary loss of a track, where an older track needs to be associated with a newer one, to ensure that they in fact relate to different instances of the same object before joining them into one track. Reidentification may be performed using object feature vectors and a neural network, yet other means for reidentification are possible. In examples where data stemming from manual tracking by an operator is used, the verification may be said to be accomplished by a human, although in most practical cases it would still be an algorithm working in the background, even in that case. Either way, the outcome will be that only data relating to tracks formed by moving objects will be assembled in the heatmap, or at least made available for use in the later tracking. As a contrast, it would be likely that there may be a lot of motion in the fields, from crops swaying back and forth, and even generating traveling "waves" of motion along the entire field. Such motion, however, will not be tracked by the PTZ-camera and by using reidentification and tracking it is straightforward not to confuse such motion with the motion of relevant objects. The heatmap may be used as is, yet it is also possible to set a threshold, either absolute or dynamic (e.g., in relation to surrounding regions) so that paths are more clearly defined. In a simplified heatmap the center of such paths could be given the value 1 while all other regions are given the value 0, while in other embodiments more of the dynamic range of the heatmap may be used, so as to either obtain a better resolution in adjustments, or to be able to prioritize between paths of different intensity (i.e., with different object track frequency) in situations where applicable.

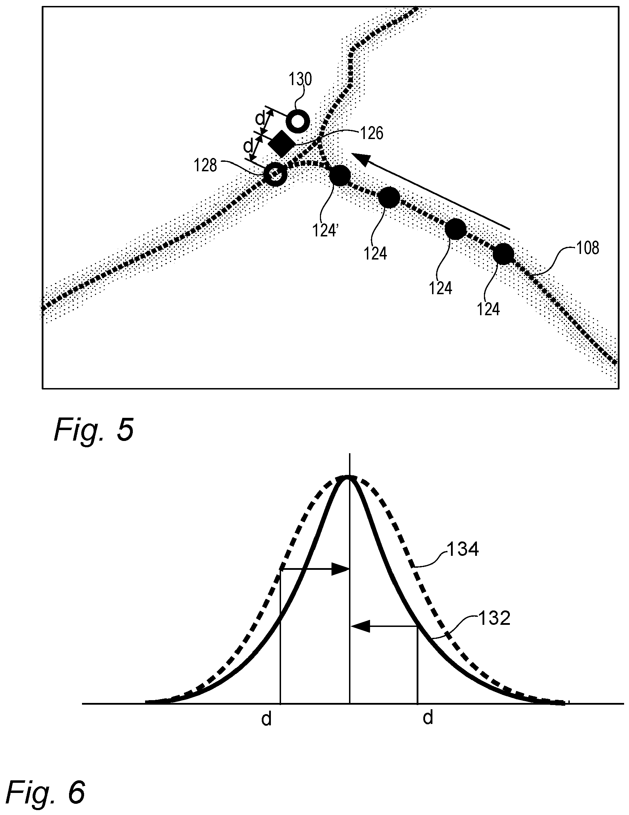

**Figs. 5** and **6** will now be used to explain how the heatmap of **Fig. 4** could be used to adjust an association measure or association threshold during tracking. In **Fig. 5** it is illustrated how a moving object is tracked as it moves from right to left in the image. The filled circles 124 indicate previous positions of the object. That is, each filled circle 124 illustrates a state, basically a position, for the object over time, and the object moves from right to left (this type of data is what is assembled in the heatmap). The last verified position is found before the fork in the road, the filled circle 124'. Next, the tracker will predict the consecutive position. Given that the object has been moving in the same direction and with the same speed, the tracker will predict the next position as indicated by the filled rhomboid 126. Then the tracker will investigate if there are any detections nearby, the nearer the better (in a general situation). In the given example there are two candidates detected, the ring shapes 128 and 130, respectively, on equal distance **d** from the predicted position. In a method according to prior art, these two detections would have equal chance of belonging to the existing track, i.e., to be associated with the prediction and thereby with the existing track. At this stage information from the heatmap enters the equation, and an example of how this may be done is presented by involving **Fig. 6.** Fig. 6 illustrates some curves 132, 134 that may be used to estimate the likelihood for a detection to be associated with a prediction based on a distance **d** between the prediction and a detection. In a simplified case the likelihood could correspond to the association measure, in that a higher value makes an association more suitable than a lower one.

Now, an application of the present invention according to one embodiment thereof, will be to select a probability density function based on a position of a detection in relation to the heatmap. The upper detection 130 is considered to be outside of any effect of the heatmap since it is not in or near an area of elevated occurrence, e.g., based on a distance from a path (exemplified by the road 108), or based on an intensity of the heatmap at that position. Based on that an original, or only slightly altered, probability density function 132 may be used. The probability density function 132 may correspond to the predicted probability density from the tracker. Entering the distance d will for this fictional case generate a score (or likelihood, or indeed association measure) of about 0.30 (arbitrary unit). For the other detection candidate 128, however, the distance between the detection and the path is small, consequently the intensity of the heatmap is elevated in the position of the detection. For that reason, an adjusted probability distribution 134 will be used, resulting in that although the distance from the prediction is the same, likelihood increases to a score of 0.70. This will mean that of the detection candidates, the detection candidate along the path will have the highest likelihood, the highest association measure, and will therefore be associated with the track.

The functionality would also have a purpose in a situation where there is only one detection candidate 128 while the detection 130 of Fig. 5 is not present. Based on the same example the unexpected, for the tracker, shift in orientation could result in that the association measure will become too low for the only detection candidate 128, its score will not reach the threshold and the track will be discontinued. Using the invention, however, the association measure may be adjusted with distance from the path, resulting in that an association threshold will be met, and the track will be continued. Instead of adjusting the association measure, the association threshold may be adjusted, so that it becomes easier for detection candidates along a path of the heatmap to reach the threshold. The approach used may vary with the type of tracker used.

Notably, even if the heatmap is binary (path or no path) the effect for an association measure and/or association threshold may be gradual. It could, e.g., be expressed as a direct, or more complex, function of distance from the detection to the path, taking into account such things as the inherent uncertainties when determining the location of a detection.

In this context it may be mentioned that throughout this description the term "association measure" has been used to describe the parameter determining the likelihood of a detection being associated with an existing track. Equivalent parameters could also be referred to as an "association cost", in which case a lower cost corresponds to a higher likelihood, "association probability" or just "probability", etc., or whatever term is used for the tracking model in question. Irrespective of the term used, the present invention could be applied to enhance tracking, and irrespective of the term used, the term could be translated into a "association measure".

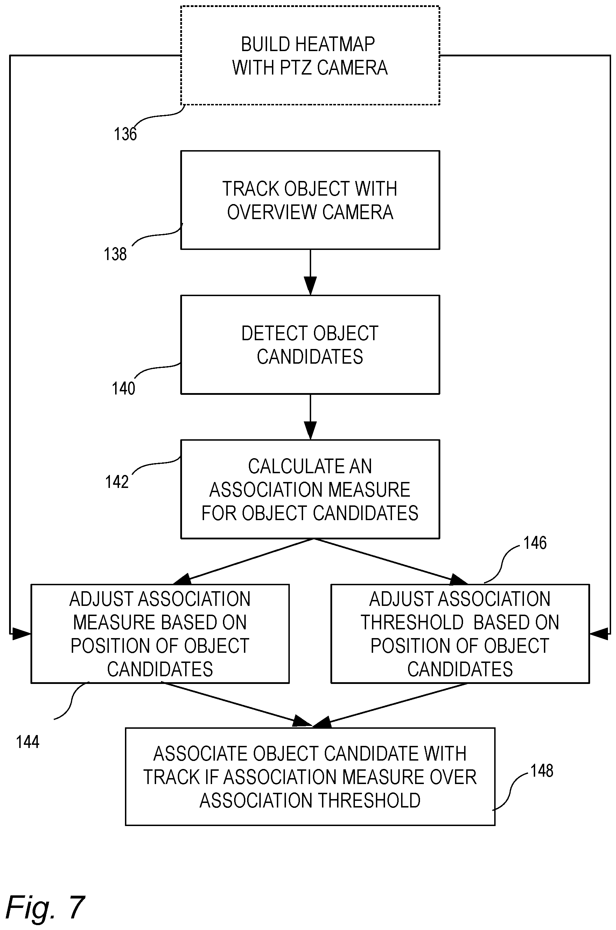

The described method is a straight-forward, step-by-step method for realizing the invention, as exemplified in the flowchart of Fig. 7. Firstly, a heatmap is assembled in step 136. This is performed for the actual camera installation, i.e., with the camera system arranged overlooking the intended field of view. Once the heatmap exists it can be used in the normal operation of the camera system, which is initiated once an object is tracked using a camera of the camera system, step 138. In the process of tracking, object candidates are detected, in step 140, and an association measure is calculated for the object candidates. This is depicted as a separate step 142, yet in an actual case the assessments and calculations of a tracker may be intertwined in a more complex manner. Following this step either the association measure or the association threshold is adjusted, in step 144 and 146 respectively. In other embodiments, both of these measures are taken, i.e., both the association measure and the association threshold are adjusted. In the last step, 148, the additional information and adjusted values are used as input when associating an object candidate with the existing track. The invention could, as mentioned before, be realized in other manners. An already touched-upon example is that a multidimensional probability distribution is generated, based on input from the heatmap. Based on the particular tracker used, other implementations of the invention may also be more suitable than others. Such decisions are considered to be within the capabilities of the skilled person, based on the description of the present invention. Furthermore, it should again be emphasized that depending on the measure or threshold used, the invention may be applied by adjusting the measure or threshold upwards or downwards, depending on the measure/threshold. For that reason, it is nonsensical to mention a direction for the adjustment in the following claims, unless it is in relation to a particular embodiment. For that reason, when the desired effect of the adjustment is mentioned in the claims, it should be read in this context and not be confused with an effort to define the invention by a result to be achieved.

## Claims

1. A method for improving tracking of objects in a scene, using an overview monitoring camera, comprising:
tracking objects in a plurality of image frames depicting the scene to produce current object tracks (138),
detecting object candidates in an image frame subsequent to the plurality of image frames depicting the scene (140), and
calculating (142), for each object candidate, an association measure which is indicative of a likelihood that the object candidate is associated with a current object track,
wherein the method further comprises:
correlating a view of the overview camera with a heatmap of the scene, the heatmap of the scene providing data indicative of areas in the scene having an elevated degree of occurrence of historical object tracks, and
adjusting the association measure (144) or an association threshold (146) for object candidates which according to the heatmap are located in areas in the scene having an elevated degree of occurrence of historical object tracks so as to increase their probability of being associated with a current object track,
associating (148) each object candidate with a current object track if the association measure is above an association threshold.

2. The method of any preceding claim, wherein the heatmap is generated using a PTZ-camera tracking objects in the scene over time and storing tracks followed by the objects.

3. The method of any preceding claim, wherein the heatmap is generated using a PTZ-camera tracking objects in the scene over time, and wherein the tracking is performed using intermittent or continuous reidentification to ensure a verified track from each individual object being tracked.

4. The method of any preceding claim, wherein the heatmap includes position measurements for recorded object tracks.

5. The method of any preceding claim, wherein the heatmap includes velocity information for recorded object tracks.

6. The method of any preceding claim, wherein the heatmap includes object class or an object speed for recorded object tracks, so as to enable filtering on object class or object speed.

7. The method of claim 6, further comprising selecting heatmap data corresponding to an identified object class, or an identified object speed.

8. The method of claim 7, wherein the tracking of current objects comprises identifying an object class to which the tracked object belongs, or an object speed for the object.

9. The method of any preceding claim, performed by a system comprising a PTZ-camera and an overview camera, wherein a view of overview camera is positionally calibrated with a view of the PTZ-camera.

10. The method of claim 2, wherein during assembly of the heatmap tracking is also performed using image data from the overview camera, wherein an association measure for the tracking performed by the overview camera is monitored for tracks verified by the PTZ-camera.

11. The method of any preceding claim, wherein the association threshold is lowered in areas of the heatmap comprising verified tracks.

12. The method of any preceding claim, wherein the association measure is increased in areas of the heatmap comprising verified tracks, with e.g. distance between object detection and a path of the heatmap, or heatmap intensity, so as to enhance a likelihood of an object detection to be associated with a current track.

13. The method of any preceding claim 1-5, wherein a functionality of an overview camera is provided by a PTZ-camera in a zoomed-out mode.

14. A camera system comprising a PTZ camera and an overview camera, configured to perform the method of claim 1.

## Amended claims

### Amended claims in accordance with Rule 137(2) EPC.

1. A method for improving tracking of objects in a scene, using a system with an overview monitoring camera and a PTZ-camera, wherein a view of overview camera is positionally calibrated with a view of the PTZ-camera, comprising:
generating a heatmap using the PTZ-camera tracking objects in the scene over time and storing tracks followed by the objects,
tracking objects, using the overview camera, in a plurality of image frames depicting the scene to produce current object tracks (138),
detecting object candidates in an image frame subsequent to the plurality of image frames depicting the scene (140), and
calculating (142), for each object candidate, an association measure which is indicative of a likelihood that the object candidate is associated with a current object track,
wherein the method further comprises:
correlating a view of the overview camera with the heatmap of the scene, the heatmap of the scene providing data indicative of areas in the scene having an elevated degree of occurrence of historical object tracks, and
adjusting the association measure (144) or an association threshold (146) for object candidates which according to the heatmap are located in areas in the scene having an elevated degree of occurrence of historical object tracks so as to increase their probability of being associated with a current object track,
associating (148) each object candidate with a current object track if the association measure is above an association threshold..

2. The method of claim 1, wherein the heatmap is generated using a PTZ-camera tracking objects in the scene over time, and wherein the tracking is performed using intermittent or continuous reidentification to ensure a verified track from each individual object being tracked.

3. The method of any preceding claim, wherein the heatmap includes position measurements for recorded object tracks.

4. The method of any preceding claim, wherein the heatmap includes velocity information for recorded object tracks.

5. The method of any preceding claim, wherein the heatmap includes object class or an object speed for recorded object tracks, so as to enable filtering on object class or object speed.

6. The method of claim 5, further comprising selecting heatmap data corresponding to an identified object class, or an identified object speed.

7. The method of claim 6, wherein the tracking of current objects comprises identifying an object class to which the tracked object belongs, or an object speed for the object.

8. The method of any preceding claim, wherein the association threshold is lowered in areas of the heatmap comprising verified tracks.

9. The method of any preceding claim, wherein the association measure is increased in areas of the heatmap comprising verified tracks, with e.g. distance between object detection and a path of the heatmap, or heatmap intensity, so as to enhance a likelihood of an object detection to be associated with a current track.

10. The method of any preceding claim, wherein a functionality of an overview camera is provided by a PTZ-camera in a zoomed-out mode.

11. A camera system comprising a PTZ camera and an overview camera, configured to perform the method of claim 1.
